# EUROPEAN PATENT APPLICATION

(11) **EP 3 034 319 A1**
(43) Date of publication of application: **22.06.2016**
(21) Application number: 13803082.0
(22) Date of filing: 12.08.2013
(51) Int. Cl.: B44C 5/04, E04F 13/10

(54) **DECORATIVE PANEL AND CONSTRUCTION SYSTEM BASED ON SAID PANEL**

(71) Applicant: Perales Aranda, Jacques, 03710 Calpe (Alicante) (ES)
(72) Inventor: Perales Aranda, Jacques, 03710 Calpe (Alicante) (ES)
(74) Representative: Isern-Jara, Nuria
(86) International application number: PCT/ES2013/070593
(87) International publication number: WO 2015/022440

(57) **Abstract**

Decorative panel that has, on the lateral edges, slots (2) and projections (3), wherein the slots (2) are arranged on the lateral edges on two of the contiguous sides whilst the projections (3) are arranged on the other two contiguous sides of the panel, and in addition the panel comprises: exterior MDF sheets (4) that are thinner but denser than an interior filing (5), the interior filing (5) of MDF being less dense but thicker tan the exterior sheets (4), decorative surfaces or sheets (6) being arranged on the exterior sheets, on the outer face thereof. This technique results in very strong and stable panels with exceptional resistance to bending, and which are easy to handle, which offers advantages in terms of the storage and transportation thereof, and in addition the formaldehyde content thereof is low, which, combined with the use of auxiliary structural elements, allows the construction of partitions and dividers.

## Description

### Object of the Invention

As established in the title, the object of the present invention is both a decorative board and the constructive system defined based on said board, where the board is formed from a series of laminas of a different nature attached to one another, forming a multilaminar or stratified assembly.

The present invention is characterized by the synergy produced as a result of the special constructive features of the board, both in its design and in the materials from which it is made, achieving a board that is characterized by its light weight, resistance, stability, exceptional bending strength, enhanced by the actual construction and nature of the materials, and easy to handle, obtaining logistic advantages for transport and storage. The board is therefore an ideal element for building light partition walls and walled enclosures.

The board combined with a series of auxiliary elements and means configures a constructive system that allows building light partition walls and walled enclosures in a simple and cost-effective manner.

Therefore, the present invention is comprised within the field of stratified laminates or laminar assemblies for forming boards used in construction.

### Background of the Invention

MDF boards (Medium Density Fiberboard) are known in the state of the art. MDF boards are produced and obtained from wood that is chipped and then subjected to a thermomechanical defibration process, the fiber being mixed with additives (resin, wax, urea), and it finally undergoes a pressing process where pressure and temperature are applied, giving rise to MDF board.

MDF board is generally denser than plywood. It can be used as a construction material. It is more resistant and much denser than particle boards.

MDF boards are classified according to their density.

Although MDF boards can be used as a constructive element, they have never been designed such that they can be used for building partition walls or separating surfaces, either due to the fact that no effective constructive design has been conceived, or that no constructive combination has been achieved concerning the materials from which they are manufactured making them light weight and giving them bending strength and stability.

Therefore, an object of the present invention is to develop a board made of MDF having a composition and design that allow using said board as a constructive element for building partition walls and separating surfaces in a simple and effective manner, developing a decorative board and a constructive system having said board as a basis, as described below and included among the essential features in claim 1.

### Description of the Invention

An object of the present invention is a decorative board made from MDF which serves for building partition walls and similar separating elements.

Another object of the present invention is a constructive system having said decorative board as a basis and which board, combined with other auxiliary elements, allows building partition walls and the like.

The decorative board is made from a laminar assembly comprising:
- outer laminas of MDF having lesser thickness and greater density than an inner filling,
- the inner filling which consists of MDF having lesser density and greater thickness than the outer laminas
- decorative laminas or surfaces arranged on the outer laminas on their outer face.

The outer laminas are made of MDF, having a high density, and they are perfectly planar and calibrated, perform well against warping and are easy to clamp and bend. They can be very easily glued, bent, printed, re-veneered and covered with PVC or decorative papers using simple technologies. Their excellent resistance-weight ratio makes them an ideal candidate for a wide range of uses. They also have E1 Classification: low formaldehyde content.

The outer laminas allow lacquering and covering with decorative materials such as natural veneer, HPL stratified laminate or finish foil

The inner filling of MDF has a density that does not exceed 300 kg/m³, compared to the density of the outer laminas which is clearly greater.

In addition to the composition of the board, said board has a general rectangular configuration comprising:
- A perimetral centered recess or notch made in two of its contiguous sides.
- A centered protrusion or projection arranged in the other two contiguous sides.

This configuration allows the tongue and groove attachment of contiguous boards without leaving any gap between boards.

Furthermore, some of the decorative boards can have a perforation which, in a possible embodiment, runs transverse to the largest dimension of the board and is arranged at mid-height; it could also have two suitably separated perforations running transverse to the largest dimension of the board. The perforations could also be arranged longitudinally along the board. These perforations make the board a board with cable ducts, and as indicated by the name, the purpose is to allow the passage of cables therethrough for installations. The number of perforations that the block with cable ducts can have does not have to be limited to two, the suitable number and dimension being possible.

On the other hand, the constructive system having the described board as a basis has accessory elements such as:
- Battens for fixing to the wall, floor and ceiling
- Ceiling finish terminal strip
- Batten bracket solution for terminal securing to wall
- Decorative brick veneer
- Decorative bead for vertical or horizontal terminal finish
- Left or right angle bead

As a result of these accessory elements combined with the boards, it is possible to build perfectly secured and finished partition walls, surfaces, separating elements in a simple and effective manner, offering a resistant and decorative constructive solution.

### Description of the Drawings

To complement the description that is being made and for the purpose of aiding to better understand the features of the invention according to a preferred practical embodiment thereof, a set of drawings is attached as an integral part of said description in which the following has been depicted with an illustrative non-limiting character.
Figure 1 shows a perspective view of a board and half a board.
Figure 2 shows a detail of the composition of the boards object of the invention.
Figure 3 shows a side view of a board.
Figure 4 shows a perspective view of a partial walled enclosure.
Figure 5 shows the vertical and horizontal finish beads, and the finish angle bead.
Figure 6 shows all the constructive elements that are part of the invention.
Figure 7 shows ceiling finish terminal strips.

### Preferred Embodiment of the Invention

A preferred embodiment of the proposed invention is described below in view of the drawings.

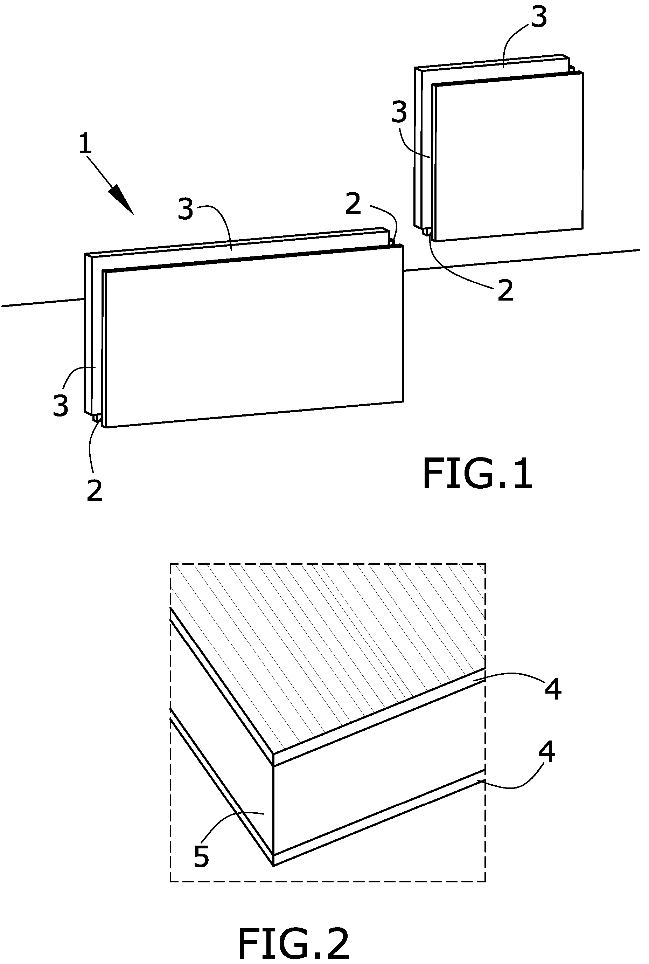

Figure 1 shows that the board (1) object of the invention has a rectangular or square configuration having notches (2) and projections (3) on the side edges, where the notches (2) are arranged on the side edges in two of the contiguous sides, whereas the projections (3) are arranged on the other two contiguous sides of the board.

In a possible embodiment, the notches (2) and the projections (3) can be centrally arranged on the edges of the board.

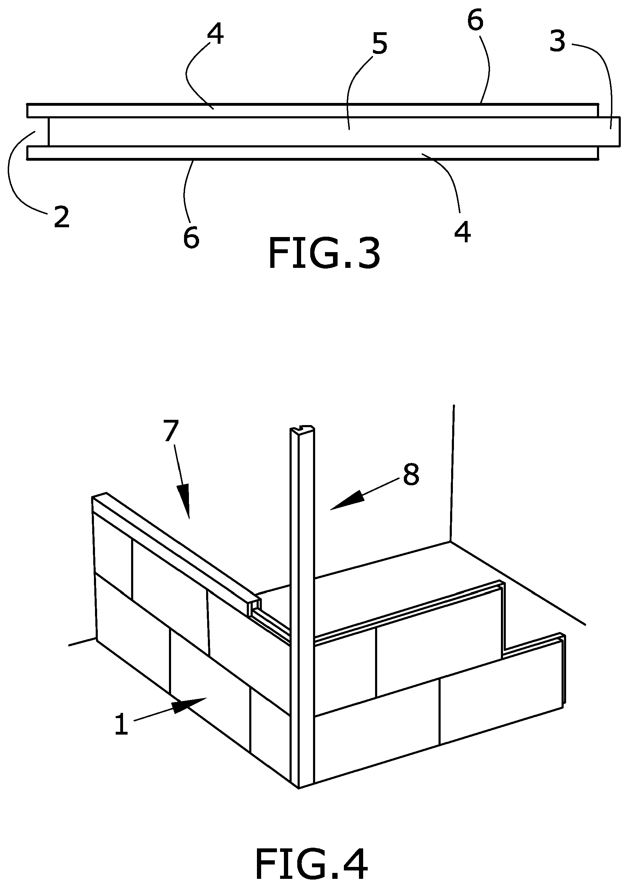

Figures 2 and 3 show that the board comprises:
- outer laminas (4) of MDF having lesser thickness and greater density than an inner filling (5),
- the inner filling (5) which consists of MDF having lesser density and greater thickness than the outer laminas (4)
- decorative laminas or surfaces (6) (Figure 3) arranged on the outer laminas on their outer face.

The decorative surfaces (6) are made with decorative materials such as natural veneer, HPL stratified laminate or finish foil

Figure 4 shows part of a walled enclosure in which there can be observed, among other auxiliary constructive elements, a decorative bead (7) for vertical or horizontal finish, as well as an angle bead (8) which, from the finishing viewpoint, has two of its contiguous sides finished in the same manner as the outer faces of the boards, and in the other two sides of said angle bead (8) one of them has a longitudinal groove or notch, whereas the other one has a protrusion for the purpose of allowing the tongue and groove attachment with the boards (1).

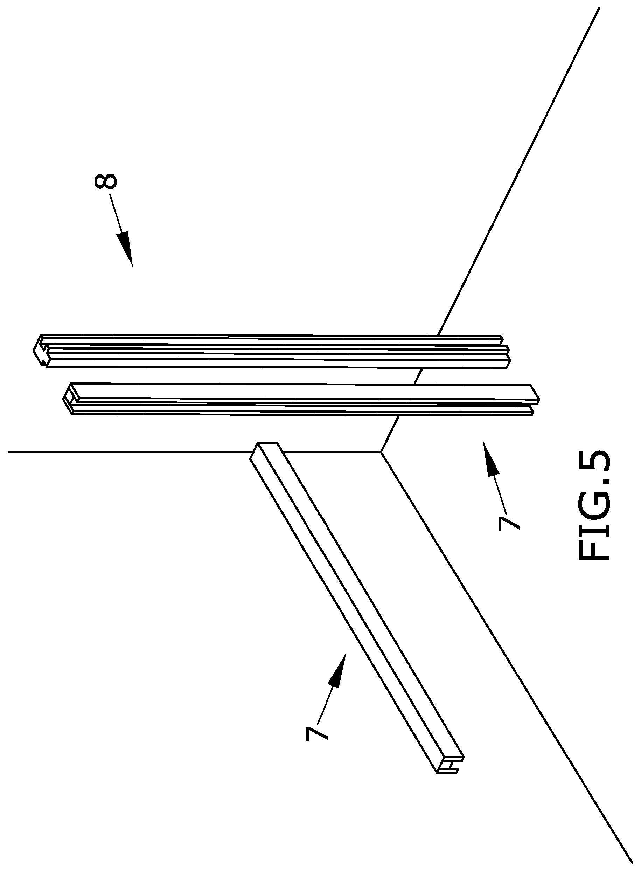

Figure 5 shows in greater detail the decorative bead (7) for vertical and horizontal finish, as well as the angle bead (8). The decorative bead (7) has been depicted in the drawing as a female bead, being able to be a male bead. On the other hand, the angle bead (8) has been depicted as being a 90º angle bead, being able to have any other angling, as required by the design, e.g., 135º. It could also even be 180º, which would make it straight, with female connection on one side and male connection on the other.

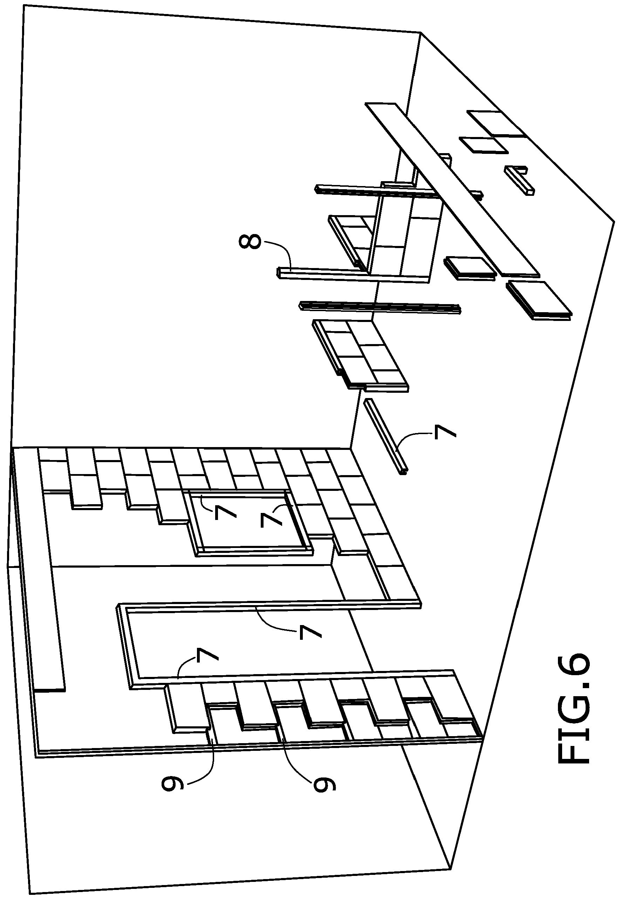

Figure 6 shows, in addition to the auxiliary constructive elements described, battens (9) for fixing to the wall, floor and ceiling, in addition to a ceiling finish terminal strip (10), thereby obtaining partition walls and separating elements that can have openings for doors, windows and the like.

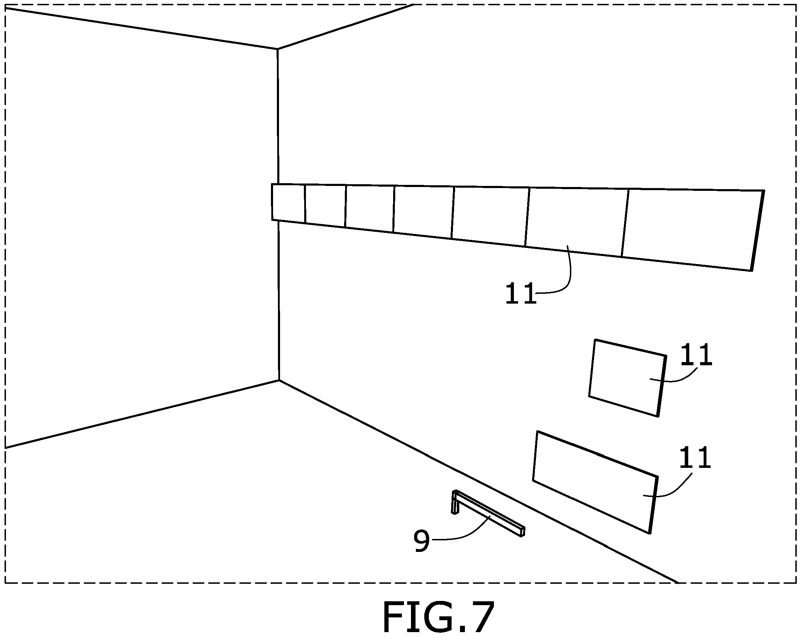

Figure 7 shows in detail decorative brick veneer (11) having a thickness that is half the thickness of the boards (1) and which will only serve for the decorative lining of certain constructive elements.

As a result of the combination of features both in composition and in the design of the boards, boards that are highly resistant and stable, with exceptional bending strength and easy handling are obtained, resulting in advantages for storage and transport. Said boards have low formaldehyde content, which combined with the use of auxiliary constructive elements allows building partition walls and separating elements.

Having sufficiently described the nature of the present invention as well as the manner of putting it into practice, it is hereby stated that within its essential features, the invention could be carried out to practice in other embodiments differing in detail from the embodiment indicated by way of example, and such embodiments would also receive the protection that is granted provided that the fundamental principle of the invention is neither altered, changed nor modified.

## Claims

1. A decorative board formed from a multilaminar assembly comprising:
- outer laminas (4) of MDF having lesser thickness and greater density than an inner filling (5),
- the inner filling (5) which consists of MDF having lesser density and greater thickness than the outer laminas (4)
- decorative laminas or surfaces (6) arranged on the outer laminas on their outer face,
**characterized in that** it has a rectangular or square configuration having notches (2) and projections (3) on the side edges, where the notches (2) are arranged on the side edges in two of the contiguous sides, whereas the projections (3) are arranged on the other two contiguous sides of the board, the board further comprising:

2. The decorative board according to claim 1, **characterized in that** the density of the inner filling (5) of MDF does not exceed 300 kg/cm³.

3. The decorative board according to claim 1, **characterized in that** the decorative surfaces (6) are made with decorative materials such as natural veneer, HPL stratified laminate or finish foil.

4. The decorative board according to claim 1, **characterized in that** the notches (2) and the projections (3) can be centrally arranged on the edges of the board.

5. The decorative board according to any of the preceding claims, **characterized in that** it has at least one perforation going from side to side.

6. The decorative board according to claim 5, **characterized in that** the at least one perforation runs transverse to the largest dimension of the board.

7. The decorative board according to claim 5, **characterized in that** the at least one perforation runs longitudinally along the board.

8. A constructive system made from the decorative board claimed above, **characterized in that** it has any of the following constructive elements:
- Battens (9) for fixing to the wall, floor and ceiling
- Ceiling finish terminal strip (10)
- Batten bracket solution for terminal securing to wall
- Decorative brick veneer (11)
- Decorative bead (7) for vertical or horizontal terminal finish
- Left or right angle bead (8).

9. The constructive system according to claim 8, **characterized in that** the decorative bead (7) for vertical or horizontal finish is male or female.

10. The constructive system according to claim 8, **characterized in that** the angle bead (8) is 90º or 135º.

11. The constructive system according to claim 8, **characterized in that** the angle bead (8) is a straight bead at 180º with female connection on one side and male connection on the other.
